# EUROPÄISCHE PATENTSCHRIFT

(11) **EP 0 349 709 B1**
(45) Veröffentlichungstag und Bekanntmachung des Hinweises auf die Patenterteilung: **26.05.1993**
(21) Anmeldenummer: 89105328.2
(22) Anmeldetag: 25.03.1989
(51) Int. Cl.: H04N 7/15

(54) **Videokonferenzeinrichtung**
Video conference arrangement
Dispositif de vidéoconférence

(30) Priorität: 08.07.1988 DE 3823219
(43) Veröffentlichungstag der Anmeldung: 10.01.1990
(73) Patentinhaber: TELENORMA GMBH, 60326 Frankfurt am Main (DE)
(72) Erfinder: Weber, Jens, Dr.-Ing., D-6232 Bad Soden (DE); Loos, Rolf, Dipl.-Ing., D-6115 Münster (DE)

(56) Entgegenhaltungen:
- EP-A- 0 014 044
- EP-A- 0 153 903
- TN-NACHRICHTEN, Heft 89, 1986,Telenorma Telefonbau und Normalzeit, Frankfurt am Main J RGEN GLEMSER, ARTHUS KESSLER"zukunftsichere Kommunikation mit Integral von TN" Seiten 3-18
- TN-NACHRICHTEN, Heft 89, 1986,Telenorma Telefonbau und Normalzeit, Frankfurt am Main WOLF-DIETER HAASS, KURT WEGENER "Neue ISDN-EndgerUte" Seiten 19-27

## Beschreibung

Die Erfindung berifft eine Video-Konferenzeinrichtung für eine Vielzahl von Teilnehmeranschlüssen, wobei jeder Teilnehmeranschluß Sende- und Empfangseinrichtungen für Sprach-Signale (elektroakustische Wandler) und für Bild-Signale (Fernsehkamera, Bildschirmmonitor) aufweist, wobei die Teilnehmeranschlüsse Zugang zu einer gemeinsamen Verarbeitungseinrichtung haben, welche zur Übermittlung der von den Teilnehmeranschlüssen eintreffenden Sprach- und Bildsignale dient, die gemeinsame Verarbeitungseinrichtung anschlußindividuelle Einrichtungen mit Bildspeichern und Lese- und Schreibeinrichtungen aufweist, wobei die Kamera Bildsignale eines Vollbildes vollständig zur Verfügung gestellt werden, und Multiplexer vorhanden sind, welche einen wahlfreien Zugriff auf die Bildsignale aller Kameras ermöglichen und wobei die den einzelnen Teilnehmeranschlüssen zu übermittelnden Sprach- und Bildsignale in Abhängigkeit von Steuersignalen dieser Teilnehmeranschlüsse in den anschlußindividuellen Einrichtungen bearbeitet werden.

Eine derartige Video-Konferenzeinrichtung ist bereits bekannt. So wird in der EP-A-0 153 903 ein Nachrichtensystem für Bildkonferenzen beschrieben, welches eine mit Bildspeichern ausgerüstete Bildkonferenz-Zentrale aufweist, die einerseits die Vermittlungsfunktion zwischen den Sendeeinrichtungen und den Empfangseinrichtungen für die Sprach- und Bildsignale wahrnimmt, andererseits sind nur in der Bildkonferenz-Zentrale und dazu lediglich im Umfang des tatsächlichen Bild-Konferenzverkehrs die technisch verhältnismäßig aufwendigen Einrichtungen für diese Vermittlung sowie für die Aufbereitung der einzelnen Bildsignale zu individuell zusammenzusetzenden Mischbildern für alle anschließbaren Sende- und Empfangseinrichtungen erforderlich.

Durch den Einsatz der Bildkonferenz-Zentrale ist es möglich, Bildkonferenzen nach der Art von Studiokonferenzen als jeweils nur eine Punkt zu Punkt Verbindung durchzuführen, wobei Kanäle in beiden Richtungen mit ausreichender Bandbreite die Übertragung von Bild-, Ton- und Signalisierungsinformationen benötigt werden. Auf einen Konferenzleiter für die Bildregie kann dabei ohne weiteres verzichtet werden, da von jedem Standort aus individuell nach eigenen Vorstellungen und wünschen ohne Auswirkungen auf die anderen Sende- und Empfangseinrichtungen jederzeit beliebig im Rahmen mehrerer vorgegebener Variationsmöglichkeiten die Regie selbst zu führen ist. Nachteilig bei diesem bekannten Nachrichtensystem für Bildkonferenzen ist die feste Zuordnung der teilnehmerindividuellen Einrichtungen und die Bereitstellung von Mikrofonen, Lautsprechern und eines besonderen Geräts mit den Wähl-Tonregie- und Bildregie-Bedienelementen.

Die Aufgabe der Erfindung besteht nun darin, das bekannte Nachrichtensystem für Bildkonferenzen derart auszugestalten, daß es universell einsetzbar ist und daß neben den Einrichtungen zum Senden und zum Empfang von Bild-Signalen keine besonderen zusätzlichen Enrichtungen, die beispielsweise ein Gerät mit Tonregie- und Bildregie-Bedienelementen benötigt werden.

Diese Aufgabe wird dadurch gelöst, daß die anschlußindividuellen Einrichtungen zu Beginn der Konferenz jeweils einem beliebigen, an der Konferenz teilnehmenden Teilnehmeranschluß für die Dauer der Teilnahme an der Konferenz fest zugeordnet werden, daß die gemeinsame Verarbeitungseinrichtung über ein Bündel von Anschlußschaltungen mit einer digitalen, eine Steuereinrichtung aufweisende Fernmelde-, insbesondere Fernsprechvermittlungsanlage, an welcher eine Vielzahl von Fernsprechapparaten über jeweils eine Teilnehmeranschlußleitung angeschlossen ist, verbunden ist, daß auf den Teilnehmeranschlußleitungen jeweils zwei gleichartige Nutzkanäle und ein Signalisierungskanal in beiden Richtungen übertragen werden, daß bei einer Konferenzverbindung auf dem einen Nutzkanal die Sprachsignale der bzw. für die Fernsprechapparate in Form von PCM-Worten und auf dem anderen Nutzkanal die komprimierten Bild-Signale von der Fernsehkamera bzw. die komprimierten Bildsignale für den Bildschirmmonitor übermittelt werden, daß dem Teilnehmeranschluß eine Eingabetastatur und/oder ein Lichtgriffel und/oder ein digitaler Positionsgeber mit einer Steuertaste zur Steuerung eines Cursors auf dem Bildschirm des Bildschirmmonitors zugeordnet ist und daß über auf dem Bildschirm angezeigte Symbole eine Funktionssteuerung mit Hilfe der Eingabetastatur bzw. des Cursors bzw. des Lichtgriffels möglich ist, wobei die Informationen zur Darstellung der Symbole auf dem Bildschirm von einem Overlay-Generator der anschlußindividuellen Einrichtung erzeugt und den Bild-Signalen für den Bildschirmmonitor hinzugefügt werden, während die Steuer- und Positionssignale vom Teilnehmeranschluß, die über den Signalisierungskanal übertragen werden, in einer Steuereinrichtung der anschlußindividuellen Einrichtung verarbeitet werden und als Funktionssteuerung zur Auslösung von Steuer- und Schaltmaßnahmen hinsichtlich der Sprach- und/oder Bild-Signale (Bild- und Tonregie) für den betreffenden Teilnehmeranschluß dienen.

Die erfindungsgemäße Videokonferenzeinrichtung ist somit in einer ISDN-fähigen digitalen Fernmeldevermittlungsanlage einsetzbar, wobei sowohl die Sprachsignale als auch die Bildsignale jeweils auf einem 64 k/bit-Kanal übertragen werden. Die Steuerung des Cursors auf dem Bildschirm des Bildschirmmonitors kann entweder über eine alphanumerische Eingabetastatur des Fernsprechapparates oder auch über eine sogenannte "Maus" oder auch über einen Lichtgriffel erfolgen. Weitere zusätzliche Einrichtungen am Teilnehmeranschluß werden nicht benötigt. Für die Aufnahme und Wiedergabe der Sprache genügt der Handapparat des Fernsprechapparates evtl. mit einer Lauthör- oder auch Freisprech-Einrichtung. Da nach dem Verbindungsaufbau der Signalisierungskanal für die Übertragung der Ton- und Bildregie-Steuersignale transparent ist, können auch Teilnehmer, welche an anderen Vermittlungsstellen angeschlossen sind, an Konferenzen teilnehmen, da diese über eine die Vermittlungsstellen verbindende Verbindungsleitung ebenfalls Zugang zu der über einen Bündel von Anschlußleitungen an der Vermittlungsstelle angeschlossenen gemeinsamen Einrichtung haben. Verfahren zur Bildkompression zur Übertragung von Fernseh-Bildsignalen mit Hilfe entsprechender Codecs mit 64 kbit/s sind bereits bekannt. Ein derartiges Verfahren wird beispielsweise in der EP-A-0 084 270 beschrieben.

Weitere Vorteile ergeben sich aus den Unteransprüchen.

Die Erfindung wird anhand eines Ausführungsbeispiels näher erläutert, welches in der Zeichnung dargestellt ist. Es zeigt:
- Fig. 1: das Blockschaltbild einer Fernmeldevermittlungsanlage,
- Fig. 2: das Darstellungsschema auf dem Bildschirm,
- Fig. 3: das Verdrahtungsschema der anschlußindividuellen Einrichtungen,
- Fig. 4: den Verarbeitungsteil für Bildsignale der anschlußindividuellen Einrichtung,
- Fig. 5: das Blockschaltbild für die Behandlung der Symbol-und Steuerinformationen in der anschlußindividuellen Einrichtung,
- Fig. 6: den Aufbau eines Bildspeichers der anschlußindividuellen Einrichtung und
- Fig. 7: den Verarbeitungsteil für Sprachsignale der anschlußindividuellen Einrichtung.

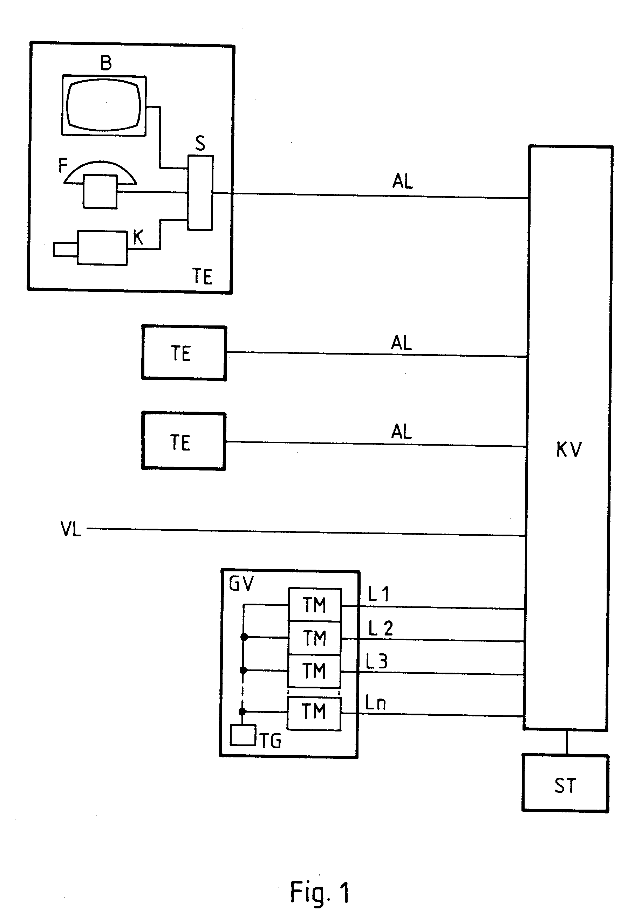

Bei dem in Fig. 1 dargestellten Blockschaltbild einer Fernmeldevermittlungsanlage sind nur diejenigen Einrichtungen gezeigt, welche zum Verständnis der Erfindung unbedingt notwendig sind. Digitale Fernmeldevermittlungsanlagen, bei welchen auf den Anschlußleitungen AL zwei Nutzkanäle und ein Signalisierungskanal in beiden Richtungen übermittelt werden, werden beispielsweise in der Zeitschrift "TN-Nachrichten", Heft 89 (1986) auf den Seiten 3 bis 18 beschrieben. An dem Koppelfeld KV der Fernmeldevermittlungsanlage sind Teilnehmerendgeräte TE über Teilnehmeranschlußleitungen AL, Fernmeldevermittlungsanlagen über Verbindungsleitungen VL und eine oder mehrere gemeinsame Verarbeitungseinrichtungen GV über Anschlußleitungen L angeschlossen. Zumindest auf den Teilnehmeranschlußleitungen AL und den Anschlußleitungen L werden jeweils zwei Nutzkanäle mit jeweils 64 kbit/s und ein Signalisierungskanal mit 16 kbit/s in beiden Richtungen übertragen. Dies kann auch bei der Verbindungsleitung VL der Fall sein. Es ist jedoch auch denkbar, eine Vielzahl von Sprach- und Signalisierungskanälen über die Verbindungsleitung VL in beiden Richtungen zu übertragen oder mehrere Verbindungsleitungen VL vorzusehen. In dem Koppelfeld KV erfolgt die Herstellung von Verbindungen zwischen Teilnehmeranschlußleitungen AL untereinander oder auch zwischen denselben und der oder den Verbindungsleitungen VL und den Anschlußleitungen L, wobei die beiden Nutzkanäle durchgeschaltet und die Informationen der Signalisierungskanäle der das Koppelfeld KV steuernden Steuereinrichtung ST zugeführt werden bzw. die Signalisierungsinformationen in dieser erzeugt und über den Signalisierungskanal den Teilnehmeranschlußleitungen AL, der oder den Verbindungsleitungen VL oder den Anschlußleitungen L zugeführt werden. Während die Übertragung der Informationen innerhalb der Nutzkanäle transparent ist, erfolgt die Übertragung von vermittlungstechnischen Informationen zumindest in der Auf- und Abbauphase von Verbindungen auf den Signalisierungskanälen nach einem vorgeschriebenen Muster (s. "TN-Nachrichten", Heft 89 (1986) Seite 6 bis 9).

Es wird davon ausgegangen, daß ein Teilnehmeranschluß mit mindestens einem Fernsprechapparat F, einer Fernsehkamera K und einem Bildschirmmonitor B ausgestattet ist, wobei sämtliche Einrichtungen über eine Schnittstellenschaltung S mit der Teilnehmeranschlußleitung AL verbunden sind. Der Fernsprechapparat F kann dabei beispielsweise als sogenanntes Multifunktionsterminal ausgebildet sein (s. "TN-Nachrichten", Heft 89 (1986), Seite 19 bis 27).

Die gemeinsame Verarbeitungseinrichtung GV weist eine Reihe von anschlußindividuellen Einrichtungen TM auf, die jeweils über eine Anschlußleitung L mit der Fernmeldevermittlungsanlage verbunden sind. Anstelle der einzelnen Anschlußleitungen ist auch eine gemeinsame Anschlußleitung denkbar, über welche eine Vielzahl von Sprach- und Signalisierungskanälen übermittelt werden. Sämtliche anschlußindividuellen Einrichtungen TM, die auch modulartig aufgebaut und beliebig zur gemeinsamen Verarbeitungseinrichtung GV hinzugefügt werden können, enthalten Taktimpulse aus einem gemeinsamen Taktgeber TG.

Zur Teilnahme an einer Video-Konferenz wählt der betreffende Teilnehmer nach Aushängen des Handapparates bzw. nach Betätigung der Taste zur Wahl bei aufliegendem Handapparat eine Ausscheidungsziffer, welche zur Kennzeichnung einer Konferenzteilnahme dient. Diese ein-oder mehrstellige Ausscheidungsziffer wird in der Steuereinrichtung ST aufgenommen und ausgewertet, worauf innerhalb des Koppelfeldes KV die betreffende Teilnehmeranschlußleitung AL mit einer freien anschlußindividuellen Einrichtung TM der gemeinsamen Verarbeitungseinrichtung GV über die betreffende Anschlußleitung L für die Dauer der Konferenzteilnahme fest verbunden wird. Sind mehrere gemeinsame Verarbeitungseinrichtungen GV vorhanden, wodurch mehrere Video-Konferenzen gleichzeitig durchgeführt werden können, so hat der betreffende Teilnehmer noch weitere Ziffern zu wählen, durch welche eine bestimmte gemeinsame Verarbeitungseinrichtung GV gekennzeichnet wird, mit welcher der betreffende Teilnehmeranschluß zu verbinden ist. Als verwaltungstechnische Maßnahme kann im Rahmen der Planung der Video-Konferenz im voraus festgelegt werden, welche gemeinsame Verarbeitungseinrichtung GV benutzt werden soll, damit auch diejenigen Teilnehmer, welche an einer bestimmten Video-Konferenz teilnehmen wollen, miteinander in Verbindung treten können. Der Hinweis auf die stattzufindende Konferenz kann beispielsweise beim Teilnehmer vorher auf dem Bildschirm des Bildschirmmonitors B angezeigt werden, wobei die anzuzeigenden Informationen beispielsweise in der Steuereinrichtung ST der Fernmeldevermittlungsanlage aufgrund entsprechender Eingabeinformationen erstellt und über den Signalisierungskanal übermittelt werden. Ebenso kann die Konferenz unter Kennzeichnung der teilnehmenden Teilnehmeranschlüsse bereits vorbereitend in der Steuereinrichtung ST vermerkt werden, so daß die Nachwahl der weiteren Ziffer entfallen kann, wenn aufgrund der Identifizierung der Teilnehmeranschlüsse, welche die Ausscheidungsziffer gewählt haben, die für die Konferenz vorgesehenen Teilnehmer mit der betreffenden gemeinsamen Verarbeitungseinrichtung GV verbunden werden. Der Verbindungsaufbau im Rahmen der Konferenz kann auch selbsttäig zu einem vereinbarten Zeitpunkt von der Steuereinrichtung ST durchgeführt werden, ebenso ist auch die Einleitung einer Konferenz durch einen Teilnehmeranschluß denkbar, woraufhin sämtliche andere an der Konferenz teilnehmende Teilnehmeranschlüsse auf Veranlassung der Steuereinrichtung ST mit der gmeinsamen Verarbeitungseinrichtung GV verbunden werden, wenn entsprechende Vorbereitungen getroffen worden sind. Auf weitere Möglichkeiten zur Einberufung einer Konferenz und zum Ein-und Austritt in bzw. aus derselben wird auf das Buch von Oden, Nachrichtenvermittlung, Oldenbourg -Verlag, München, Wien, 1975, und zwar auf die Seiten 86 bis 90 verwiesen.

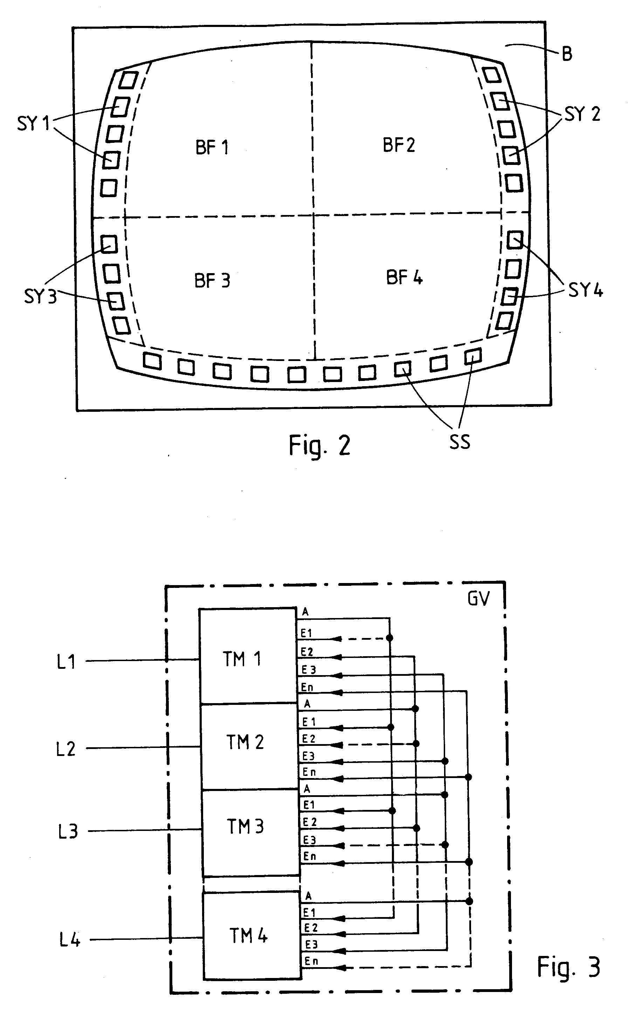

Bei dem in Fig. 2 gezeigten Bildschirm kann es sich um den Bildschirm eines Bildschirmmonitors B oder einer Datensichtstation oder auch um eine Flü ss igkristallanzeige handeln. An dem unteren Rand des Bildschirms werden Symbole SS dargestellt, welche zur Funktionssteuerung (Bild- und Ton-Regie) im Hinblick auf den betreffenden Teilnehmeranschluß dienen, während an den Seitenrändern Symbole SY1 bis SY4 angezeigt werden, welche die Funktionssteuerung der Sprach- und Bildsignale der übrigen an der Video-Konferenz teilnehmenden Teilnehmeranschlüsse hinsichtlich der Wiedergabe an dem betreffenden Teilnehmeranschluß betreffen. Die von den Fernsehkameras der übrigen an der Konferenz teilnehmenden Teilnehmeranschlüsse aufgenommenen Bildinformationen werden auf den Bildschirmabschnitten BF1 bis BF4 dargestellt, wobei es sich bei den Bilddarstellungen sowohl um die Portraits der Teilnehmer als auch um Dokumente handeln kann. Es ist ebenso denkbar, anstelle der Darstellung mehrerer Teilnehmer nur den jeweilig sprechenden Teilnehmer auf dem ganzen Bildschirm darzustellen, wobei in diesem Fall lediglich eine Gruppe von Symbolen SY benötigt wird. Die Art der Darstellung kann dabei von dem betreffenden Teilnehmer selbst gewählt werden. Bei den symbolen SS und SY handelt es sich jeweils um die bildliche Darstellung einer Funktion, so dienen z. B. die Symbole SS zur Umschaltung von Personendarstellung auf Dokumentendarstellung, wozu in der Regel die gesamte Bildschirmfläche mit Ausnahme der notwendigen Symboldarstellung herangezogen werden kann, die Scharfschaltung der eigenen Fernsehkamera, die Ein- und Ausschaltung des Bildschirmmonitors B, die Helligkeitsregelung, weitere Einstellungen des Bildschirms und evtl. die Auswahl, welche Sprecher auf dem Bildschirm dargestellt werden sollen, wenn es sich um mehr als vier bzw. fünf Teilnehmer an der Konferenz handelt. Die Symbole SY beinhalten die Lautstärke und Balancesteuerung und evtl. die Steuerung des Abbildungsmaßstabes bei Dokumenten. Zu jedem dieser Symbole kann ein Kontra-Symbol vorgesehen sein, welches zur Verringerung bzw. zur Erhöhung des Lautstärkesignals, bzw. der Hell/Dunkelsteuerung, usw., dient.

Das Auslösen der durch die Symbole dargestellten Funktionen kann auf verschiedene Weise geschehen. So ist es denkbar, die jeweilige Funktion durch die manuelle Berührung des betreffenden Symbols auszulösen (touch-screen). Ebenso kann auch ein Lichtgriffel vorhanden sein, welcher mit seiner Spitze auf das betreffende Symbol zu richten ist. Eine andere Möglichkeit der Funktionsauswahl kann darin bestehen, einen Pfeil oder Cursor über den Bildschirm zu bewegen. Dies kann entweder durch einen digitalen Positionsgeber (mouse) geschehen oder auch durch die Betätigung entsprechender Steuertasten einer alphanumerischen Eingabetastatur des Multifunktionsterminals F (s. Fig. 1) erfolgen, wobei bei Deckungsgleichheit des Cursors mit dem jeweiligen Symbol die Steuertaste des digitalen Positionsgebers bzw. die Eingabetaste der alphanumerischen Tastatur zu betätigen ist. Über die Art und Weise der Darstellung der Symbole, die Bewegung des Cursors und die Positionseingabe desselben wird weiter unten noch ausführlich eingegangen. Es wird noch darauf hingewiesen, daß die Darstellung der Bildinformationen mehrerer an einer Video-Konferenz teilnehmenden Personen in der DE-A-26 40 019 bereits beschrieben ist.

Die Informationen über Position- und Steuersignal werden in Form von entsprechenden Datenworten in der Teilnehmerendeinrichtung TE (s. Fig. 1) an der Schnittstelleneinrichtung S dem Signalisierungs (D)-Kanal zugeführt und zur gemeinsamen Verarbeitungseinrichtung GV übertragen.

Wie bereits erwähnt, kann die anschlußindividuelle Einrichtung TM modulartig aufgebaut sein, wobei innerhalb eines gewissen Rahmens die gemeinsame Verarbeitungseinrichtung GV mit einer beliebigen Anzahl von anschlußindividuellen Einrichtungen TM ausgestattet sein kann, wobei die Zahl der maximal an einer Konferenz teilnehmenden Teilnehmeranschlüsse auf die maximale Zahl der anschlußindividuellen Einrichtungen TM der gemeinsamen Verarbeitungseinrichtung GV beschränkt ist. Es wird noch darauf hingewiesen, daß an der Konferenz auch Teilnehmeranschlüsse teilnehmen können, welche keine Sende- und Empfangseinrichtungen für Bildsignale aufweisen. In diesem Fall unterbleibt die Aussendung dieser Informationen an dem betreffenden Teilnehmeranschluß durch die anschlußindividuelle Einrichtung, wodurch der Teilnehmeranschluß nur die entsprechenden Sprachsignale erhält.

Die Verdrahtung der anschlußindividuellen Einrichtung TM untereinander wird in Fig. 3 gezeigt. Sowohl für die Bild-Signale als auch für die Sprachsignale weist jede anschlußindividuelle Einrichtung TM jeweils einen Ausgang A und jeweils Eingänge E1 bis En auf. Dabei ist jeweils der Ausgang einer anschlußindividuellen Einrichtung TM mit einem bestimmten Eingang E der eigenen und der anderen anschlußindividuellen Einrichtungen TM verbunden. Bei den Bildschirm-Signalen kann der Ausgang A auch mit dem eigenen Eingang E wieder verbunden sein, wie dies durch die gestrichelte Darstellung gekennzeichnet ist, während bei den Sprachsignalen der eigene Eingang E jeweils unbeschaltet bleibt, da einerseits die Möglichkeit gegeben sein kann, auch das von der eigenen Fernsehkamera aufgenommene Bild auf dem Bildschirmmonitor darzustellen, während bekannterweise die Sprachsignale des eigenen Anschlusses nicht demselben im Rahmen einer Konferenz zugeführt werden.

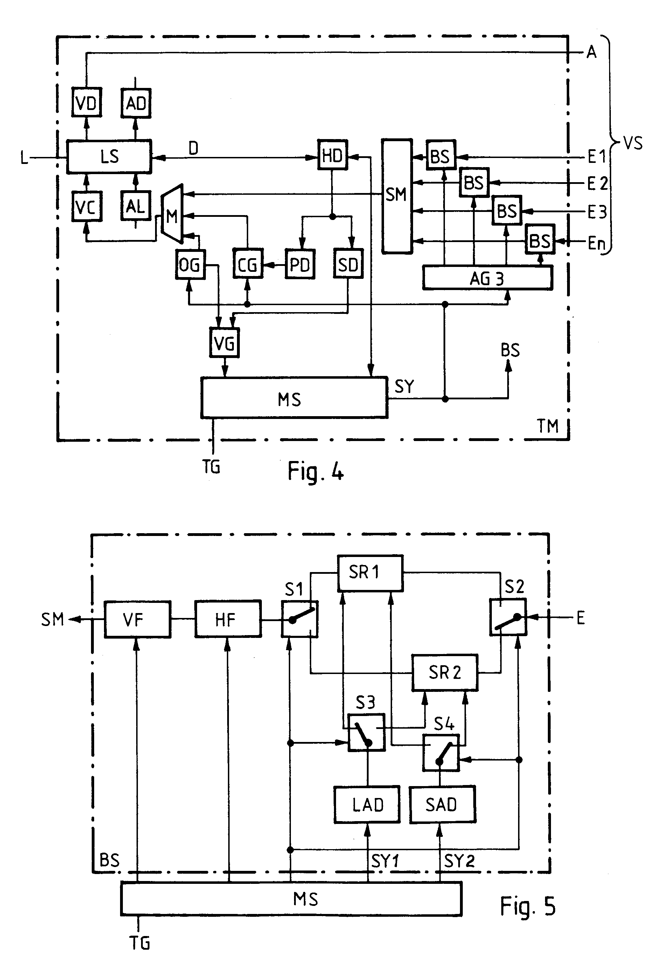

Jede anschlußindividuelle Einrichtung TM (Fig. 4) weist als Schnittstelle zur Anschlußleitung L eine Leitungsschaltung LS auf, welche zur Aufteilung der auf der Anschlußleitung L ankommenden Nutz- und Signalisierungskanäle bzw. zur Zusammenfügung derselben zur Aussendung auf die Anschlußleitung L dient. Die Sprachsignale des einen Nutzkanals werden von der Leitungsschaltung LS einem Sprachdecoder AD zugeführt, im welchem die kompandierten PCM-Sprachsignale in lineare PCM-Sprachsignale umgewandelt werden. Der an der Leitungsschaltung LS angeschlossene Sprachcodierer AC dient zur Umwandlung der linearen PCM-Sprachsignale in kompandierte PCM-Sprachsignale, die dann auf einem Nutzkanal über die Anschlußleitung L übertragen werden. Die Bildsignale, die auf dem anderen Nutzkanal übertragen werden, werden einem Video-Decoder VD zugeführt, welcher die komprimierten Bildinformationen in lineare Bildinformationen umwandelt, diese gelangen dann auf den Ausgang A der anschlußindividuellen Einrichtung TM.

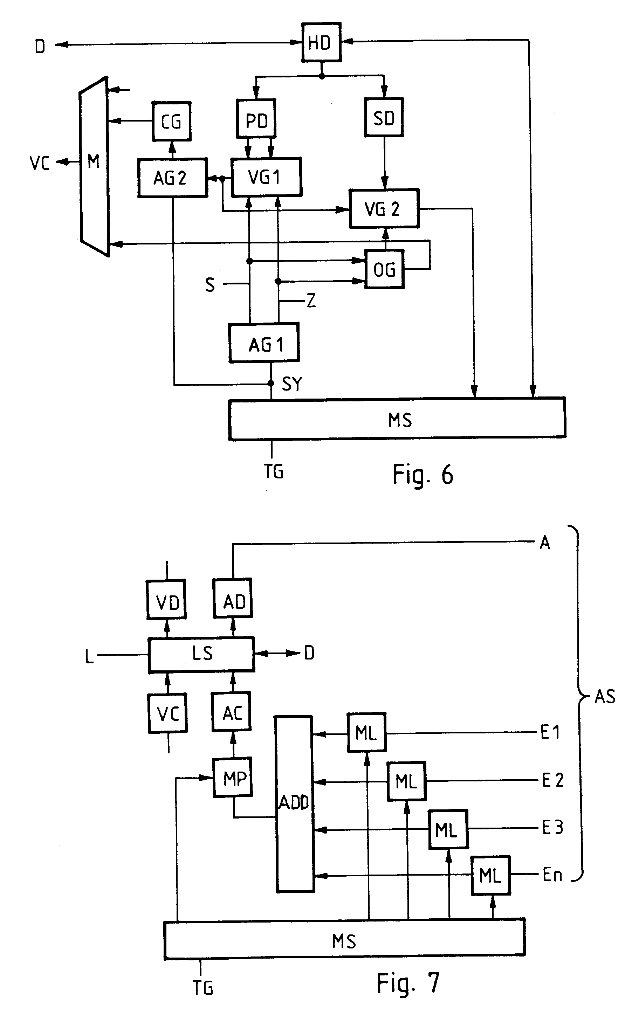

Die an den Eingängen E1 bis En eintreffenden linearen Bildinformationen der anderen und evtl. auch der eigenen anschlußindividuellen Einrichtung TM werden jweils einem Bildspeicher BS zur Zwischenspeicherung zugeführt, um anschließend über einen Speichermultiplexer SM einem Multiplexer M übermittelt zu werden. Die Steuerung des Einschreibens und des Auslesens der Bildsignale in den Bildspeicher BS erfolgt über den Adressgenerator AG3, welcher von einem Synchronisationssignal SY gesteuert wird. Auf den Aufbau des Bildspeichers und dessen Arbeitsweise wird weiter unten noch im Rahmen der Beschreibung der Fig. 6 eingegangen.

Der Multiplexer M faßt die auf dem Bildschirm darzustellenden Informationen zusammen, die von dem Speichermultiplexer SM, dem Overlay-Generator OG und dem Cursor-Generator CG bereitgestellt werden. Das Ausgangssignal des Multiplexers M gelangt zum Video-Codierer VC, welcher die an seinem Eingang anliegenden linearen Bildinformationen in komprimierte Bildinformationen zur Übermittlung auf dem anderen Nutzkanal über die Anschlußleitung L zusammenfaßt. Der Overlay-Generator OG und der Cursor-Generator CG werden ebenfalls von dem Synchronisationskanal SY gesteuert.

An der Leitungsschaltung LS ist ein HDLC-Kontroller HD angeschlossen, welcher die Informationen aufnimmt, die über den Signalisierungskanal übermittelt werden bzw. die auf diesem zu übertragenden Informationen aussendet. Die anschlußindividuelle Einrichtung TM weist eine Steuereinrichtung MS auf, welche mit dem HDLC-Kontroller verbunden ist. Die auf dem Signalisierungskanal vom Teilnehmeranschluß eintreffende Positionsinformation wird von dem Positionsdecoder PD decodiert und dient zur Festlegung der augenblicklichen Position des Cursors, während das Steuersignal zur Auslösung der durch den Cursor gekennzeichneten Funktion von dem Steuersignal-Decoder SD erkannt wird. Dieses Signal zusammen mit dem Symbolsignal aus dem Overlay-Generator OG wird einem Vergleicher VG zugeführt, welcher bei Übereinstimmung ein entsprechendes Steuersignal zur Auslösung der Funktion an die Steuereinrichtung MS weitergibt. Über den weiteren Aufbau und Wirkungsweise der zuletzt beschriebenen Einrichtungen wird weiter unten noch ausführlicher eingegangen.

Die Steuereinrichtung MS erhält das Taktsignal vom gemeinsamen Taktgeber TG und leitet daraus das Synchronisationssignal SY ab. Es wird noch darauf hingewiesen, daß der Overlay-Generator OG auch die entsprechenden Anzeigeinformationen für eine Liste von Funktionsangeboten enthalten kann, die schriftlich auf dem Bildschirm dargestellt werden können und ebenfalls durch eine Einstellung des Cursors auf den gewünschten Text mit anschließender Betätigung der Steuertaste des Postionsgebers bzw. der Eingabetaste der alphanumerischen Tastatur ausgelöst werden können.

Das am Eingang E eintreffende, von der gleichen oder einen anderen anschlußindividuellen Einrichtung TM ausgesendete Bild-Signal (Fig. 5) wird in dem Bildpunktspeicher SR2 eingespeichert, während das Bild-Signal des vorhergehenden Bildes aus dem Bildpunktspeicher SR1 ausgelesen und dem Speicher-Multiplexer SM zugeführt wird. Das Auslesen eines Bildpunktspeichers SR erfolgt durch den Lese-Adress-Generator LAD, während das Einschreiben eines Bild-Signals in den Bildpunktspeicher SR durch den Schreib-Adress-Generator SAD gesteuert wird. Die Anschaltung des jeweiligen Bildpunktspeichers SR zum Ein- bzw. Auslesen und die Anschaltung des Lese-Adress-Generators bzw. Schreibadress-Generators an die Bildpunktspeicher SR erfolgt über Schaltmittel, welche symbolisch durch die Schalter S1 bis S4 dargestellt sind. Die Steuerung der Schalter erfolgt durch die Steuereinrichtung MS der anschlußindividuellen Einrichtung TM, welche die Umschaltung jeweils bei den geraden bzw. ungeraden Nummern der aufeinander folgenden Bilder veranlaßt. Die Steuerung des Lese- bzw. Schreibadress-Generators LAD bzw. SAD erfolgt durch die Synchronisationssignale SY1 und SY2, welche für sämtliche Einrichtungen aller anschlußindividuellen Einrichtungen TM einer gemeinsamen Verarbeitungseinrichtung GV taktgleich sind, so daß die Synchronität aller Bild-Signale gewährleistet ist.

Das aus dem Bildpunktspeicher SR ausgelesene Bild-Signal wird einem Horizontalfilter HF und einem Vertikalfilter VF vor der Weitergabe an den Speichermultiplexer SM zugeführt. Diese beiden Filter HF und VF werden von der Steuereinrichtung MS gesteuert und dienen zu einer dem Abbildungsmaßstab entsprechenden Interpolation des Bildes. Der Abbildungsmaßstab ist ebenso wie die Bildposition vom Teilnehmeranschluß her steuerbar. Die Steuersignale für die beiden Filter HF und VF, werden, wie bereits beschrieben, über die Symbolauswahl am Bildschirm ausgelöst, wie dies weiter unten noch ausführlich beschrieben wird.

In Fig. 6 werden diejenigen Einrichtungen gezeigt, die zur Erzeugung der Symbole und zur Auslösung der durch diese dargestellten Funktionen dienen. Wie bereits beschrieben, wird die Position des Cursors zusammen mit dem Steuer- bzw. Eingabesignal über den Signalisierungskanal zur gemeinsamen Verarbeitungseinrichtung GV übermittelt und dem betreffenden HDLC-Kontroller HD zugeführt. An diesem ist der Positionsdecoder PD und der Steuersignaldecoder SD angeschlossen. Der Positionsdecoder PD liefert an seinem Ausgang die Spaltenangabe und die Zeilenangabe der jeweiligen Position des Positionsgebers, während der Steuersignal-Decoder SD ein Ausgangssignal liefert, wenn die ausgewählte Funktion ausgewählt werden soll (beispielsweise Betätigung der Steuertaste des Positionsgebers).

Der Adress-Generator AG1 liefert ständig die Adressen sämtlicher Spalten S und Zeilen Z, die sowohl dem Vergleicher VG1 als auch dem Overlay-Generator OG zugeführt werden. Der Overlay-Generator OG liefert bekanntlich die Bildinformationen für die auf dem Bildschirm darzustellenden Symbole. Im Vergleicher VG wird die Position des Positionsgebers, die am Ausgang des Positions-Decoders PD anliegt, mit der jeweiligen Spalten- und Zeilenadresse verglichen und bei Übereinstimmung durch den Vergleicher V1 ein Signal erzeugt, welches den Adress-Generator AG freigibt, so daß der Cursor-Generator CG angesteuert werden kann, worauf die Bildinformation des Cursors zum Bildschirm gelangt. Wird jetzt die Steuertaste des Positionsgebers beim Teilnehmeranschluß betätigt, so gelangt das Steuersignal zum Steuersignal-Decoder SD1, welcher daraufhin ein entsprechendes Signal an den Vergleicher VG2 abgibt. Da an diesem auch das Vergleichssignal des Vergleichers VG1 und das entsprechende Signal aus dem Overlay-Generator OG anliegt, erzeugt der Vergleicher VG2 ein die ausgewählte Funktion kennzeichnendes Steuersignal für die Steuereinrichtung MS. Dieses Steuersignal wird also nur dann wirksam, wenn die aktuelle Position des Schreibstrahles des Bildschirms mit der Position des Positionsgebers übereinstimmt und gleichzeitig das Steuersignal des Positionsgebers mit der augenblicklichen Position des Cursors übereinstimmt. Erst wenn diese vier Bedingungen gleichzeitig erfüllt sind, erhält die Steuereinrichtung das betreffende Steuersignal.

Die Behandlung der Sprachsignale im Rahmen einer Video-Konferenz wird anhand des Blockschaltbildes gemäß Fig. 7 erläutert. Wie bereits erwähnt, werden die Sprachsignale, die in digitaler Form über die Anschlußleitung L auf dem einen Nutzkanal übermittelt worden sind, im Sprachdecoder AD in lineare PCM-Signale umgewandelt. Diese gelangen auf den Ausgang A und somit zu den übrigen anschlußindividuellen Einrichtungen TM. Die Sprachsignale an den Ausgängen A der übrigen anschlußindividuellen Einrichtungen TM werden den Eingängen E1 bis En zugeführt. Im Gegensatz zu den Bild-Signalen erhalten die anschlußindividuellen Einrichtungen TM nicht das eigene Sprachsignal, welches bekanntlich bei Konferenzschaltungen der sendenden Stelle nicht mitgeteilt wird.

An den Eingängen E1 bis En ist jeweils ein Multiplizierer ML angeschlossen, welcher zur individuellen Lautstärkeregelung des Sprachsignals auf Veranlassung der Steuereinrichtung MS, die bekanntlich ihre Steuersignale von dem betreffenden Teilnehmeranschluß in der bereits beschriebenen Weise erhält, gesteuert werden. Die Sprachsignale an den Ausgängen der Multiplizierer ML werden durch den Addierer ADD addiert und einem weiteren Multiplizierer MP zugeführt. Dienten die Multiplizierer ML zur individuellen Einstellung der Lautstärke der Sprachsignale der einzelnen, an der Konferenz beteiligten Teilnehmer, so kann mit Hilfe des Multiplizierer MP die Lautstärke des Sprachsignals eingestellt werden, welches dem betreffenden Teilnehmeranschluß übermittelt wird. Am Ausgang des Multiplizierer MP ist ein Sprach-Codierer AC angeschlossen, welcher die linearen PCM-Sprachsignale in kompandierte PCM-Sprachsignale zur Übermittlung auf dem einen Nutzkanal zum Teilnehmeranschluß umwandelt.

Es ist auch denkbar, falls die Bandbreite der Teilnehmeranschluß-Verbindungs-und Anschlußleitungen es zuläßt, die Bild-Signale auch mit einer höheren Datenrate zu übertragen. Weiterhin können in der gemeinsamen Verarbeitungseinrichtung GV (s. Fig. 1) Einrichtungen vorgesehen werden, welche die Bildpunktinformationen eines Bildspeichers BS (s. Fig. 4 oder 5) derart umwandeln, daß sie als Faximile-Information zu einem oder mehreren Teilnehmeranschlüssen über einen Nutzkanal übertragen werden können. Voraussetzung ist dabei, daß der betreffende Teilnehmeranschluß ein Faximile -Gerät aufweist. Die Einleitung einer solchen Übertragung kann dabei beispielsweise wieder über die eingangs beschriebene Art mit Hilfe der Symboldarstellung gesteuert werden. Ebenso ist es auch denkbar, durch eine geeignete Einrichtung in der gemeinsamen Verarbeitungseinrichtung GV die von einer Fernsehkamera aufgenommenen Informationen eines Dokuments, die in einem Bildspeicher BS enthalten ist, in den den Buchstaben, Ziffern und Zeichen entsprechenden ASCII-Code umzuwandeln und diese Information dann über einen Nutzkanal an einen oder mehrere Teilnehmeranschlüsse zu senden, wo jeweils ein entsprechender Drucker zur Wiedergabe vorhanden sein muß. Eine solche Art der Informationsbehandlung und Übertragung ist besonders bei der Einführung von Dokumenten in die Video-Konferenz interessant, um auf diese Weise den Teilnehmern bleibende Informationen zu übermitteln.

Aufgrund ihres unabhängigen Aufbaus läßt sich die gemeinsame Verarbeitungseinrichtung GV an jede digitale Fernmeldevermittlungsanlage anschließen, welche Anschlußleitungen mit den beschriebenen Eigenschaften aufweisen muß. Damit lassen sich derartige Fernmeldevermittlungsanlagen nicht nur nachträglich ausrüsten, sondern auch auf einfache Weise mit zusätzlichen Leistungsmerkmalen versehen. Die gemeinsame Verarbeitungseinrichtung GV, die auch, wie bereits erwähnt, in mehreren Exemplaren vorhanden sein kann, kann auch einen Bestandteil der Steuereinrichtung ST der Fernmeldevermittlungsanlage (s. Fig. 1) bilden.

## Patentansprüche

1. Video-Konferenzeinrichtung für eine Vielzahl von Teilnehmeranschlüssen, wobei jeder Teilnehmeranschluß Sende- und Empfangseinrichtungen für Sprach-Signale (z.B. elektroakustische Wandler) und für Bild-Signale (z.B. Fernsehkamera, Bildschirmmonitor) aufweist, wobei die Teilnehmeranschlüsse Zugang zu einer gemeinsamen Verarbeitungseinrichtung (GV) haben, welche zur Übermittlung der von den Teilnehmeranschlüssen eintreffenden Sprach- und Bildsignale dient, die gemeinsame Verarbeitungseinrichtung (GV) anschlußindividuelle Einrichtungen (TM) mit Bildspeichern (BS) und Lese- und Schreibeinrichtungen aufweist, wobei die Kamera-Bildsignale eines Vollbildes vollständig zur Verfügung gestellt werden, und Multiplexer vorhanden sind, welche einen wahlfreien Zugriff auf die Bildsignale aller Kameras (K) ermöglichen und wobei die den einzelnen Teilnehmernanschlüssen zu übermittelnden Sprach-und Bildsignale in Abhängigkeit von Steuersignalen dieser Teilnehmeranschlüsse in den anschlußindividuellen Einrichtungen (TM) bearbeitet werden,
**dadurch gekennzeichnet,**
daß die anschlußindividuellen Einrichtungen (TM) zu Beginn der Konferenz jeweils einem beliebigen, an der Konferenz teilnehmenden Teilnehmeranschluß für die Dauer der Teilnahme an der Konferenz fest zugeordnet werden, daß die gemeinsame Verarbeitungseinrichtung (GV) über ein Bündel von Anschlußleitungen (L1 bis Ln) mit einer digitalen, eine Steuereinrichtung aufweisende Fernmeldeinsbesondere Fernsprechvermittlungsanlage, an welcher eine Vielzahl von Fernsprechapparaten (F) über jeweils eine Teilnehmeranschlußleitung (AL) angeschlossen ist, verbunden ist, daß auf den Teilnehmeranschlußleitungen (AL) jeweils zwei gleichartige Nutzkanäle und ein Signalisierungskanal in beiden Richtungen übertragen werden, daß bei einer Konferenzverbindung auf dem einen Nutzkanal die Sprach-Signale der bzw. für die Fernsprechapparate in Form von PCM-Worten und auf dem anderen Nutzkanal die komprimierten Bild-Signale von der Fernsehkamera (K) bzw. die komprimierten Bild-Signale für den Bildschirmmonitor (B) übermittelt werden, daß dem Teilnehmeranschluß eine Eingabetastatur und/oder ein Lichtgriffel und/oder ein digitaler Positionsgeber mit einer Steuertaste zur Steuerung eines Cursors auf dem Bildschirm des Bildschirmmonitors (B) zugeordnet ist und daß über auf dem Bildschirm angezeigte Symbole (SS, SY) eine Funktionssteuerung mit Hilfe der Eingabetastatur bzw. des Cursors bzw. des Lichtgriffels möglich ist, wobei die Informationen zur Darstellung der Symbole auf dem Bildschirm von einem Overlay-Generator (OG) der anschlußindividuellen Einrichtung (TM) erzeugt und den Bild-Signalen für den Bildschirmmonitor (B) hinzugeführt werden, während die Steuer- und Positionssignale vom Teilnehmeranschluß, die über den Signalisierungskanal übertragen werden, in einer Steuereinrichtung (MS) der anschlußindividuellen Einrichtung (TM) verarbeitet werden und als Funktionssteuerung zur Auslösung von Steuer- und Schaltmaßnahmen hinsichtlich der Sprach- und/oder Bild-Signale (z.B. Bild- und Tonregie) für den betreffenden Teilnehmeranschluß dienen.

2. Videokonferenzeinrichtung nach Anspruch 1,
dadurch gekennzeichnet,
daß die Symbole (SS, SY) an einem oder mehreren Rändern des Bildschirms des Bildschirmmonitors (B) angezeigt werden.

3. Videokonferenzeinrichtung nach einem der Ansprüche 1 oder 2,
dadurch gekennzeichnet,
daß bei einer Konferenz mit mehr als einem weiteren Teilnehmer die von den Fernsehkameras (K) der übrigen an der Konferenz beteiligten Teilnehmeranschlüsse aufgenommenen Bildinformationen jeweils auf dem Bildschirmmonitor (B) eines Teilnehmeranschlusses angezeigt werden, in dem die von den übrigen Teilnehmeranschlüssen eintreffenden Bildsignale zur Zusammenstellung der auf dem Bildschirm anzuzeigenden Bildinformationen in der gemeinsamen Verarbeitungseinrichtung (GV) entsprechend verarbeitet werden.

4. Videokonferenzeinrichtung nach einem der Ansprüche 1 bis 3,
dadurch gekennzeichnet,
daß jeweils in der anschlußindividuellen Einrichtung (TM) für sämtliche Konferenzteilnehmer individuelle Bildspeicher (BS) vorgesehen sind, die zur Zwischenspeicherung der Bild-Signale der Fernsehkameras (K) der an der Konferenz beteiligten Teilnehmeranschlüsse dienen, und daß die Ausgänge der Bildspeicher (BS) mit einem Speichermultiplexer (SM) verbunden sind, dessen Ausgangssignal als Bild-Signal zu dem Teilnehmeranschluß gesendet wird.

5. Videokonferenzeinrichtung nach Anspruch 4,
dadurch gekennzeichnet,
daß zwischen dem Ausgang des Bildspeichers (BS) und dem Eingang des Speichermultiplexers (SM) ein horizontales (HF) und ein vertikales Filter (VF) zugeschaltet ist, wobei diese Filter die Position und/oder den Abbildungsmaßstab des Bildes auf dem Bildschirm des Bildschirmmonitors (B) unter Einfluß der Steuereinrichtung (MS) bestimmen.

6. Videokonferenzeinrichtung nach einem der Ansprüche 1 bis 5,
dadurch gekennzeichnet,
daß die Leitungsschaltung (LS) als Schnittstelle zur Fernmeldevermittlungsanlage vorgesehen ist, daß an dieser Leitungsschaltung (LS) in der Empfangseinrichtung ein Video-Decoder (VD) und in der Sendeeinrichtung ein Video-Codierer (VC) angeschlossen ist, wobei durch den Video-Decoder (VD) eine Dekomprimierung und durch den Video-Codierer (VC) eine Komprimierung der Bild-Signale erfolgt.

7. Videokonferenzeinrichtung nach Anspruch 6,
dadurch gekennzeichnet,
daß an der Leitungsschaltung (LS) ein HDLC-KOntroller (HD) angeschlossen ist, welcher den Empfang und die Aussendung von Informationen auf dem Signalisierungskanal steuert und welcher mit der Steuereinrichtung (MS) verbunden ist.

8. Videokonferenzeinrichtung nach einem der Ansprüche 1 bis 7,
dadurch gekennzeichnet,
daß ein zweiter Multiplexer (M) vorgesehen ist, an welchem der Ausgang des Speichermultiplexers (SM), der Overlay-Generator (OG) und ein Cursor -Generator (CG) angeschlossen ist, und daß der Ausgang des zweiten Multiplexers (M) mit dem Video-Codierer (VC) verbunden ist.

9. Videokonferenzeinrichtung nach einem der Ansprüche 1 bis 8,
dadurch gekenzeichnet,
daß der HDLC-Kontroller (HD) mit einem Steuersignal-Decoder (SD) und mit einem Positions-Decoder (PD) verbunden ist, wobei der Positions-Decoder (PD) das über den Signalisierungskanal übermittelte Positions-Signal in einen x- und einen y-Wert umwandelt, daß diese Werte in einem ersten Vergleicher (VG1) zugeführt werden, welcher einen Vergleich mit den Ausgangssignalen eines synchron mit dem Bildwechsel betriebenen ersten Adress-Generators (AG1) durchführt und bei Übereinstimmung ein Steuersignal für einen zweiten Adress-Generator (AG2) erzeugt und daß der zweite synchron mit dem Bildwechsel betriebene Adress-Generator (AG2) den Cursor-Generator (CG) ansteuert.

10. Videokonferenzeinrichtung nach einem der Ansprüche 1 bis 9,
dadurch gekennzeichnet,
daß das Steuersignal, welches von dem ersten Vergleicher (VG1) erzeugt wird, einen zweiten Vergleicher (VG2) freigibt, der das Ausgangssignal des Steuersignals-Decoders (SD), welches beispielsweise durch die Steuertaste des digitalen Positionsgebers erzeugt wurde, mit dem Ausgangssignal des Overlay-Generators (OG) vergleicht und daß bei Übereinstimmung ein Signal für die Steuereinrichtung (MS) durch den zweiten Vergleicher (V2) erzeugt wird, wobei durch das Signal die ausgewählte Funktion gekennzeichnet wird.

11. Videokonferenzeinrichtung nach einem der Ansprüche 1 bis 10,
dadurch gekennzeichnet,
daß der Bildspeicher (BS) aus zwei Bildpunktspeichern (SR1, SR2) gebildet wird, wobei jeweils der eine Speicher zum Auslesen der aktuellen Bildinformation und der andere Speicher zum Einlesen der folgenden Bildinformation dient und die Ansteuerung der Speicher durch einen synchron mit dem Bildwechsel betriebenen dritten Adress-Generator (AG3) erfolgt.

12. Videokonferenzeinrichtung nach Anspruch 11,
dadurch gekennzeichnet,
daß der dritte Adress-Generator (AG3) aus einem Lese- Adress-Generator (LAD) und einem Schreib-Adress-Generator (SAD) besteht, wobei beide Generatoren (LAD, SAD) wahlweise mit beiden Speichern (SR1, SR2) verbindbar sind.

13. Videokonferenzeinrichtung nach einem der Ansprüche 1 bis 12,
dadurch gekennzeichnet,
daß sämtliche Adress-Generatoren (AG1 bis AG3) an einer Synchronleitung (SY) angeschlossen sind, daß die Synchronisationssignale auf der Synchronisationsleitung (SY) von einem für sämtliche anschlußindividuelle Einrichtungen (TM) gemeinsamen Taktgeber (TG) erzeugt werden.

14. Videokonferenzeinrichtung nach einem der Ansprüche 1 bis 13,
dadurch gekennzeichnet,
daß an der Leitungsschaltung (LS) in Empfangsrichtung ein Sprachsignal-Decoder (AD) und in Senderichtung ein Sprachsignal-Codierer (AC) angeschlossen ist, wobei durch den Sprachsignal-Decoder (AD) eine Dekompandierung und durch den Sprachsignal-Codierer (AC) eine Kompandierung der PCM-Sprachsignale erfolgt.

15. Videokonferenzeinrichtung nach einem der Ansprüche 1 bis 14,
dadurch gekennzeichnet,
daß das Ausgangssignal des Sprachsignal-Decoders (AD) jeweils den anderen anschlußindividuellen Einrichtungen (TM) zugeführt wird, daß für jedes Ausgangssignal ein Multiplizierer (ML) vorgesehen ist, daß die Ausgänge sämtlicher Multiplizierer (ML) mit einem Addierer (ADD) verbunden sind, dessen Ausgangssignal über einen weiteren Multiplizierer (MP) dem Sprachsignal-Codierer (AC) zugeführt wird, wobei die Multiplizierer (ML, MP) zur Lautstärkeregelung der Sprachsignale durch die Steuereinrichtung (MS) dienen.

16. Videokonferenzeinrichtung nach einem der Ansprüche 1 bis 15,
dadurch gekennzeichnet,
daß die Steuersignale am Teilnehmeranschluß durch manuelle Berührung der Symbole (SS, SY) am Bildschirm des Bildschirmmonitors (B) erzeugt werden.

17. Videokonferenzeinrichtung nach einem der Ansprüche 1 bis 16,
dadurch gekennzeichnet,
daß die Steuersignale am Teilnehmeranschluß durch eine Auswahl von Funktionsangeboten durch Eingabe der die Funktionsangebote kennzeichnenden Kennziffern erzeugt werden, wobei die Bildschirminformation zur Darstellung der Funktionsangebote in dem Overlay-Generator (OG) enthalten sind und die Auswertung der eingebenen Kennziffern in Abhängigkeit von dem jeweiligen Funktionsangebot in der Steuereinrichtung (MS) erfolgt.

18. Videokonferenzeinrichtung nach einem der Ansprüche 1 bis 17,
dadurch gekennzeichnet,
daß die anschlußindividuelle Einrichtung (TM) einen weiteren Bildspeicher aufweist, welcher zur Übernahme von entsprechend für die Wiedergabe auf einem Faximile-Gerät bearbeiteten Bildschirm-Information dient, die über einen Nutzkanal zu einem Teilnehmeranschluß übertragen werden.

19. Videokonferenzeinrichtung nach einem der Ansprüche 1 bis 18,
dadurch gekennzeichnet,
daß bei einer reinen Textinformation der Faximile-Information in der anschlußindividuellen Einrichtung (TM) eine Umsetzung in die entsprechenden ASCII-Zeichen erfolgt, die über einen Nutzkanal zu einem Teilnehmeranschluß übertragen werden.

20. Videokonferenzeinrichtung nach einem der Ansprüche 1 bis 19,
dadurch gekennzeichnet,
daß auf dem Bildschirm des Bildschirmmonitors (B) allgemeine, den Teilnehmeranschluß betreffende Symbole (SS) und die anderen Teilnehmeranschlüsse betreffende Symbole 8SY1 bis SY4) angezeigt werden.

21. Videokonferenzeinrichtung nach einem der Ansprüche 1 bis 2 ,
dadurch gekennzeichnet,
daß die gemeinsame Verarbeitungseinrichtung (VG) einen Teil der Steuereinrichtung (ST) bildet.

## Claims

1. Video-conference equipment for a plurality of subscriber terminals, wherein each subscriber terminal comprises transmitting and receiving equipments for audio signals (for example electro-acoustic transducers) and for video signals (for example television camera, picture screen monitor), wherein the subscribers' terminals have access to a common processing equipment (GV), which serves for the transmission of the audio and video signals arriving from the subscribers' terminals, the common processing equipment (GV) comprises equipments (TM), which are individual to each terminal, with picture storage devices (BS) and reading and writing equipments, wherein the camera video signals of a full frame are put at disposal completely, and multiplexers are present, which enable a freely selectable access to the video signals of all cameras (K) and wherein the audio and video signals, which are to be transmitted to the individual subscriber terminals, are processed in the equipments (TM), which are individual to each terminal, in dependence on control signals of these subscriber terminals, characterised thereby, that the equipments (TM), which are individual to each terminal, are each at the beginning of the conference firmly associated with a respective desired subscriber terminal, which participates in the conference, for the duration of the participation in the conference, that the common processing equipment (GV) is connected by way of a bunch of connecting lines L1 to Ln) with a digital communications exchange, in particular telephone exchange, which comprises a control equipment and to which a plurality of telephone sets (F) are each connected by way of a respective subscriber's line (AL), that two information channels and a signalling channel are each time transmitted in both directions on the subscribers' lines (AL), that - in the case of a conference connection on the one information channel - the audio signals of or for the telephone sets are transmitted in the form of pulse code modulation words and the compressed video signals from the television camera (K) or the compressed video signals for the picture screen monitor (B) are transmitted on the other information channel, that an input keyboard and/or light stylus and/or a digital position transmitter with a control key for the control of a cursor on the picture screen of the picture screen monitor (B) is or are associated with the subscriber's terminal and that a functional control with the aid of the input keyboard or the cursor or the light stylus is possible by way of symbols (SS, SY) indicated on the picture screen, wherein the information data for the representation of the symbols on the picture screen are generated by an overlay generator (OG) of the equipment (TM) individual to each subscriber and added to the video signals for the picture screen monitor (B), whilst the control and position signals from the subscriber's terminal, which are transmitted over the signalling channel, are processed in a control equipment (MS) of the equipment (TM) individual to each subscriber and serve as functional control for the initiation of control and switching measures in respect of the audio and/or video signals (for example picture and sound direction) for the subscriber's terminal concerned.

2. Video conference equipment according to claim 1, characterised thereby, that the symbols (SS, SY) are indicated at one or more edges of the picture screen of the picture screen monitor (B).

3. Video conference equipment according to one of the claims 1 and 2, characterised thereby, that in the case of a conference with more than one participant, the picture information data picked up by the television cameras (K) of the other subscribers' terminals participating in the conference are each time indicated on the picture screen monitor (B) of a subscriber's terminal in that the video signals arriving from the other subscribers' terminals are processed appropriately in the common processing equipment (GV) for the composition of the picture information data to be indicated on the picture screen.

4. Video conference equipment according to one of the claims 1 to 3, characterised thereby, that individual picture storage devices (BS) for all conference participants are provided each time in the equipment (TM) individual to each subscriber and serve for the intermediate storage of the video signals of the television cameras (K) of the subscribers' terminals participating in the conference and that the outputs of the picture storage devices (BS) are connected with a storage multiplexer (SM), the output signal of which is transmitted as video signal to the subscriber's terminal.

5. Video conference equipment according to claim 4, characterised thereby, that an horizontal filter (HF) and a vertical filter (VF) are connected on between the output of the picture storage devices (BS) and the input of the storage multiplexer (SM), wherein these filters determine the position and/or the imaging scale of the picture on the picture screen of the picture screen monitor (B) under the influence of the control equipment (MS).

6. Video conference equipment according to one of the claims 1 to 5, characterised thereby, that the line switching device (LS) is provided as interface to the communications exchange, that a video decoder (VD) is connected to this line switching device (LS) in the receiving direction and a video coder (VC) is connected to this line switching devise (LS) in the transmitting direction, wherein an expansion of the video signals takes place by the video decoder (VC) and a compression of the video signals takes place by the video coder (VC).

7. Video conference equipment according to claim 6, characterised thereby, that an HDLC controller (HD), which controls the reception and the transmission of information data on the signalling channel and which is connected with the control equipment (MS), is connected to the line switching device (LS).

8. Video conference equipment according to one of the claims 1 to 7, characterised thereby, that a second multiplexer (M) is provided, to which the output of the storage multiplexer (SM), the overlay generator (OG) and a cursor generator (CG) are connected and the output of the second multiplexer (M) is connected with the video coder (VC).

9. Video conference equipment according to one of the claims 1 to 8, characterised thereby, that the HDLC controller (HD) is connected with a control signal decoder (SD) and with a position decoder (PD), wherein the position decoder (PD) converts the position signal transmitted over the signalling channel into an x-value and a y-value, that these values are fed to a first comparator (VG1), which performs a comparison with the output signals of a first address generator (AG1) operated synchronously with the frame change and on agreement generates a control signal for a second address generator (AG2) and that the second address generator (AG2) operated synchronously with the frame change drives the cursor generator (CG).

10. Video conference equipment according to one of the claims 1 to 9, characterised thereby, that the control signal, which is generated by the first comparator (VG1), releases a second comparator (VG2), which compares the output signal of the control signal decoder (SD), which was for example produced by the control key of the digital position transmitter, with the output signal of the overlay generator (OG) and, on agreement, a signal for the control equipment (MS) is generated by the second comparator, wherein the selected function is identified by that signal,

11. Video conference equipment according to one of the claims 1 to 10, characterised thereby, that the picture storage device (BS) is formed of two picture dot storage devices (SR1, SR2), wherein each time the one storage device serves for the reading-out of the actual picture information and the other storage device serves for the writing-in of the following picture information and the driving of the storage devices takes place by a third address generator (AG3) operated synchronously with the frame change.

12. Video conference equipment according to claim 11, characterised thereby, that the third address generator (AG3) consists of a reading address generator (LAD) and a writing address generator (SAD), wherein both generators (LAD, SAD) are selectably connectible with both storage devices (SR1, SR2).

13. Video conference equipment according to one of the claims 1 to 12, characterised thereby, that all address generators (AG1 to AG3) are connected to a synchronising line (SY) and that the synchronising signals on the synchronising line (SY) are generated by a clock pulse transmitter (TG) common to all equipments (TM), which are individual to each terminal.

14. Video conference equipment according to one of the claims 1 to 13, characterised thereby, that an audio signal decoder (AD) is connected to the line switching device (LS) in receiving direction and an audio signal coder (AC) is connected to the line switching device (LS) in transmitting direction, wherein an expansion of the pulse code modulation audio signals takes place by the audio signal decoder (AD) and a compression of the pulse code modulation audio signals takes place by the audio signal coder (AC).

15. Video conference equipment according to one of the claims 1 to 14, characterised thereby, that the output signal of the audio signal decoder (AD) is fed each time to the other equipments (TM), which are individual to each terminal, that a multiplier (ML) is provided for each output signal and that the outputs of all multipliers (ML) are connected with an adder (ADD), the output signal of which is fed by way of a further multiplier (MP) to the audio signal coder, wherein the multipliers (ML, MP) serve for the loudness regulation of the audio signals by the contact equipment (MS).

16. Video conference equipment according to one of the claims 1 to 15, characterised thereby, that the control signals at the subscriber's terminal are produced by manual touching of the symbols (SS, SY) at the picture screen of the picture screen monitor (B).

17. Video conference equipment according to one of the claims 1 to 16, characterised thereby, that the control signals at the subscriber's terminal are produced by a selection of function offers through input of numerals identifying the function offers, wherein the picture screen information data for the representation of the function offers are contained in the overlay generator (OG) and the evaluation of the entered identifying numerals takes place in the control equipment (MS) in dependence on the respective function offer.

18. Video conference equipment according to one of the claims 1 to 17, characterised thereby, that the equipment (TM) individual to each subscriber contains a further picture storage device which serves for the take-over of picture screen information data which have been processed appropriately for the reproduction on a facsimile receiver and are transmitted over an information channel to a subscriber's terminal.

19. Video conference equipment according to one of the claims 1 to 18, characterised thereby, that in the case of a pure text information of the facsimile information, a conversion takes place in the equipment (TM) individual to each subscriber into the corresponding ASCII symbols which are transmitted over an information channel to a subscriber's terminal.

20. Video conference equipment according to one of the claims 1 to 19, characterised thereby, that general symbols (SS) concerning the subscriber's terminal and symbols (SY1 to SY4) concerning the other subscribers' terminals are indicated on the picture screen of the picture screen monitor (B).

21. Video conference equipment according to one of the claims 1 to 20, characterised thereby, that the common processing equipment (GV) forms a part of the control equipment (ST).

## Revendications

1. Dispositif de conférence vidéo pour une multiplicité de postes d'abonnés, dans lequel chaque poste d'abonné comporte des dispositifs d'émission et de réception pour des signaux vocaux (par exemple des transducteurs électroacoustiques) ou pour des signaux d'images (par exemple une caméra de télévision, un moniteur à écran), et dans lequel les postes d'abonnés ont accès à un dispositif commun de traitement (GV), qui sert à retransmettre les signaux vocaux et les signaux d'images qui arrivent des postes d'abonnés, le dispositif commun de traitement (GV) possède des dispositifs (TM), qui sont prévus individuellement pour chaque poste et comporte des mémoires d'images (BS) et des dispositifs de lecture et d'enregistrement, et dans lequel les signaux d'une image d'une caméra sont entièrement disponibles, et il est prévu des multiplexeurs, qui permettent un accès libre aux signaux d'images de toutes les caméras (K), et dans lequel les signaux vocaux et les signaux d'images, qui doivent être transmis à différents postes d'abonnés, sont traités en fonction de signaux de commande de ces postes d'abonnés, dans les dispositifs (TM) prévus individuellement par abonné,
caractérisé par le fait
que les dispositifs (TM), prévus individuellement pour les postes d'abonné, sont associés de façon fixe, au début de la conférence, respectivement à un poste d'abonné quelconque, qui participe à la conférence, pour la durée de la participation à la conférence, que le dispositif commun de traitement (GV) est réuni par l'intermédiaire d'un faisceau de lignes de raccordement (L1, Ln) à une installation numérique de commutation de télécommunications, notamment de commutation téléphonique, qui comporte un dispositif de commande et à laquelle sont raccordés une multiplicité de postes téléphoniques (F) par l'intermédiaire de lignes respectives d'abonnés (AL), que respectivement deux canaux identiques et un canal de signalisation sont transmis dans les deux directions dans les lignes d'abonnés (AL), que dans le cas d'une liaison de conférence, les signaux vocaux des ou pour les postes téléphoniques sont transmis sous la forme de mots MIC dans un canal utile et les signaux d'images comprimés délivrés par la caméra de télévision (K) ou les signaux d'images comprimés pour le moniteur à écran (B) sont retransmis à l'autre canal utile, qu au poste d'abonné est associé un clavier d'entrée et/ou un style lumineux et/ou un capteur numérique de position comportant une touche de commande pour commander un curseur sur l'écran du moniteur à écran (B) et qu'une commande de fonction est possible à l'aide du clavier d'entrée ou du curseur ou du style lumineux au moyen de symboles (SS, SY) affichés sur l'écran, l'information servant à représenter les symboles sur l'écran étant produite par un générateur de symboles overlay (OG) du dispositif (TM) prévu pour chaque poste d'abonné et envoyé aux signaux d'images pour le moniteur à écran (B), tandis que les signaux de commande et de position, qui sont délivrés par le poste d'abonné et sont transmis par l'intermédiaire du canal de signalisation, sont traités dans un dispositif de commande (MS) du dispositif (TM) prévu pour chaque poste d'abonné et sont utilisés, en tant que commande de fonction, pour le déclenchement de dispositions de commande et de commutation en ce qui concerne les signaux vocaux et/ou les signaux d'image (par exemple la régie image et la régie son pour le poste d'abonné considéré).

2. Dispositif de conférence vidéo suivant la revendication 1, caractérisé en ce que les symboles (SS,SY) sont affichés sur un ou plusieurs bords de l'écran du moniteur à écran (B).

3. Dispositif de conférence vidéo suivant l'une des revendications 1 ou 2, caractérisé par le fait que dans le cas d'une conférence comportant plus d'un autre abonné, les informations d'images enregistrées par les caméras de télévision (K) des autres postes d'abonnés participant à la conférence sont affichées respectivement sur le moniteur à écran (B) d'un poste d'abonné, dans lequel les signaux d'images, qui arrivent des autres postes d'abonnés, sont traités de façon correspondante pour la réunion des informations d'image, qui doivent être affichées sur l'écran, dans le dispositif commun de traitement (GV).

4. Dispositif de conférence vidéo selon l'une des revendications 1 à 3, caractérisé en ce que respectivement dans le dispositif (TM) prévu pour chaque poste d'abonné il est prévu, pour tous les participants à la conférence, des mémoires individuelles d'images (BS), qui servent à mémoriser temporairement les signaux d'image des caméras de télévision (K) des postes d'abonnés participant à la conférence, et que les sorties des mémoires d'images (BS) sont raccordées à un multiplexeur de mémoire (SM), dont le signal de sortie est envoyé en tant que signal d'image au poste d'abonné.

5. Dispositif de conférence vidéo selon la revendication 4, caractérisé en ce qu'entre la sortie de la mémoire d'images (BS) et l'entrée du multiplexeur de mémoire (SM) sont raccordés, en supplément, un filtre horizontal (HF) et un filtre vertical (VF), ces filtres déterminant la position et/ou l'échelle de grandissement de l'image sur l'écran du moniteur à écran (B) sous l'influence du dispositif de commande (MS).

6. Dispositif de conférence vidéo selon l'une des revendications 1 à 5, caractérisé en ce que le circuit de ligne (LS) est prévu en tant qu'interface de raccordement à l'installation de commutation de télécommunications, qu'un décodeur vidéo (VD) dans le dispositif de réception et un codeur vidéo (VC) dans le dispositif d'émission sont raccordés à ce circuit de ligne (LS), une décompression des signaux vidéo étant réalisée par le décodeur vidéo (VD) et une compression des signaux d'image étant réalisée par le codeur vidéo (VC).

7. Dispositif de conférence vidéo selon la revendication 6, caractérisé en ce qu'au circuit de ligne (LS) est raccordé un dispositif de commande HDLC (HD), qui commande la réception et l'émission d'informations dans le canal de signalisation et est raccordé au dispositif de commande (MS).

8. Dispositif de conférence vidéo selon l'une des revendications 1 à 7, caractérisé en ce qu'il est prévu un second multiplexeur (M), auquel est raccordé la sortie du multiplexeur de mémoire (SM), le générateur de symboles overlay (OG) et un générateur de curseur (CG), et que la sortie du second multiplexeur (M) est raccordée au codeur vidéo (VC).

9. Dispositif de conférence vidéo selon l'une des revendications 1 à 8, caractérisé en ce que le dispositif de commande HDLC (HD) est raccordé à un décodeur (SD) des signaux de commande et à un décodeur de position (PD), le décodeur de position (PD) convertissant le signal de position retransmis par l'intermédiaire du canal de signalisation en une valeur x et une valeur y, que ces valeurs sont envoyées à un premier comparateur (VG), qui réalise une comparaison avec les signaux de sortie d'un premier générateur d'adresses (AG1) fonctionnant en synchronisme avec le changement d'image, et produit, en cas de coïncidence, un signal de commande pour un second générateur d'adresses (AG2), et que le second générateur d'adresses (AG2), qui fonctionne en synchronisme avec le changement d'image, commande le générateur de curseur (CG).

10. Dispositif de conférence vidéo selon l'une des revendications 1 à 9, caractérisé en ce que le signal de commande, qui est produit par le premier comparateur (VG1), libère un second comparateur (VG2), qui compare le signal de sortie du décodeur de signaux de commande (SD), qui a été produit par exemple au moyen de la touche de commande du capteur de position numérique, au signal de sortie du générateur de symboles overlay (OG) et qu'en cas de coïncidence, un signal pour le dispositif de commande (MS) est délivré par le second comparateur (VG2), le signal caractérisant la fonction sélectionnée.

11. Dispositif de conférence vidéo selon l'une des revendications 1 à 10, caractérisé en ce que la mémoire d'images (BS) est formée de deux mémoires de points d'image (SR1, SR2), respectivement une mémoire est utilisée pour la lecture de l'information d'image actuelle et l'autre mémoire pour l'enregistrement de l'information d'image suivante, et la commande de la mémoire est réalisée au moyen d'un troisième générateur d'adresses (AG3) qui fonctionne en synchronisme avec le changement d'images.

12. Dispositif de conférence vidéo selon la revendication 11, caractérisé en ce que le troisième générateur d'adresses (AG3) est constitué par un générateur d'adresses de lecture (LAD) et un générateur d'adresses d'enregistrement (SAD), les deux générateurs (LAD, SAD) pouvant être raccordés au choix aux deux mémoires (SR1, SR2).

13. Dispositif de conférence vidéo selon l'une des revendications 1 à 12, caractérisé en ce que tous les générateurs d'adresses (AG1, AG3) sont raccordés à une ligne de synchronisation (SY), que les signaux de synchronisation sont produits dans la ligne de synchronisation (SY) par un générateur de cadence (TG) qui est commun à tous les dispositifs (TM) prévus individuellement pour les postes d'abonnés.

14. Dispositif de conférence vidéo selon l'une des revendications 1 à 13, caractérisé en ce qu'au circuit de ligne (LS) sont raccordés, dans le dispositif dans le sens de réception, un décodeur (AD) de signaux vocaux et, dans le sens de l'émission, un codeur (AC) de signaux vocaux, une suppression de la compression-expansion étant réalisée par le décodeur (AD) des signaux vocaux et une compression-expansion des signaux vocaux MIC étant exécutée par le codeur (AC) des signaux vocaux.

15. Dispositif de conférence vidéo selon l'une des revendications 1 à 14, caractérisé en ce que le signal de sortie du décodeur (AD) des signaux vocaux est envoyé respectivement aux autres dispositifs (TM) prévus individuellement pour les postes d'abonnés, que pour chaque signal de sortie il est prévu un premier multiplexeur (ML), que les sorties de tous les multiplexeurs (ML) sont raccordées à un additionneur (ADD), dont le signal de sortie est envoyé par l'intermédiaire d'un autre multiplicateur (MP) au codeur (AC) des signaux vocaux, les multiplexeurs (ML, MDD) étant utilisés pour régler l'intensité acoustique des signaux vocaux au moyen du dispositif de commande (MS).

16. Dispositif de conférence vidéo selon l'une des revendications 1 à 15, caractérisé en ce que les signaux de commande sont produits dans le poste d'abonné par contact manuel des symboles (SS, SY) sur l'écran du moniteur à écran (B).

17. Dispositif de conférence vidéo selon l'une des revendications 1 à 16, caractérisé en ce que les signaux de commande sont produits dans le poste d'abonné au moyen d'une sélection d'offres de fonctions, moyennant l'introduction des chiffres caractéristiques caractérisant les offres de fonctions, l'information d'écran pour la représentation des offres de fonctions étant contenue dans le générateur de symboles overlay (OG), et l'évaluation des chiffres caractéristiques introduits s'effectuant en fonction de l'offre respective de fonctions dans le dispositif de commande (MS).

18. Dispositif de conférence vidéo selon l'une des revendications 1 à 17, caractérisé en ce que le dispositif (TM) prévu pour chaque poste d'abonné comporte une autre mémoire d'images, qui sert à retransmettre des informations d'écran, traitées de façon correspondante pour leur retransmission à un appareil de fac-similé et qui sont transmises par l'intermédiaire d'un canal utile à un poste d'abonné.

19. Dispositif de conférence vidéo selon l'une des revendications 1 à 18, caractérisé en ce que, dans le cas d'une pure information de texte constituant l'information de fac-similé, une conversion en les caractères ASCII correspondants_{,} qui sont transmis par l'intermédiaire du canal utile à un poste d'abonné, est exécutée dans le dispositif (TM) prévu dans chaque poste d'abonne.

20. Dispositif de conférence vidéo selon l'une des revendications 1 à 19, caractérisé en ce que les symboles généraux (SS), qui concernent le poste d'abonné, et des symboles généraux (SY1 à SY4), qui concernent les autres postes d'abonnés, sont affichés sur l'écran du moniteur à écran (B).

21. Dispositif de conférence vidéo selon l'une des revendications 1 et 2, caractérisé en ce que le dispositif commun de traitement (VG) forme une partie du dispositif de commande (ST).
